(19) 

Europäisches
Patentamt
European
Patent Office
Office européen
des brevets

(11) **EP 4 603 812 A1**

(12) **EUROPEAN PATENT APPLICATION**

(43) Date of publication:
**20.08.2025 Bulletin 2025/34**

(21) Application number: **25150134.2**

(22) Date of filing: **03.01.2025**

(51) International Patent Classification (IPC):
**G01K 1/00** (2006.01)  **G01K 3/10** (2006.01)
**G01K 13/00** (2021.01)  **G01K 15/00** (2006.01)

(52) Cooperative Patent Classification (CPC):
**G01K 15/007; G01K 1/00; G01K 3/10; G01K 13/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2024 FI 20245176**

(71) Applicant: **Produal Oy**
**48770 Kotka (FI)**

(72) Inventors:
• **Ilmasti, Aki**
**01390 Vantaa (FI)**
• **Salli, Antti-Aleksi**
**02600 Espoo (FI)**

(74) Representative: **Berggren Oy**
**P.O. Box 16**
**Eteläinen Rautatiekatu 10A**
**00101 Helsinki (FI)**

(54) **INSTALLATION QUALITY OF A TEMPERATURE TRANSMITTER AND INSTALLATION QUALITY DETERMINATION METHOD**

(57)    The invention relates to An air flow compensated room temperature transmitter (400) configured to determine an installation quality score, IQS, of the temperature transmitter (400) and comprising a computing device (404) and an air flow measurement unit (100) comprising a known mass (101), a resistive heating element (102), a thermistor (103), at least one heat sink (104), and data transmission means (105). The heating element (102) is configured to heat the known mass (101) to an elevated temperature and the thermistor (103) is configured to measure its temperature during cooling for calculation of a cooldown time of the known mass (101) defined based on the measured resistances of the heated known mass (101), The installation quality score, IQS, is determined based on the cooldown time. The invention further relates to an installation quality score determination method and a computer program product.

500

Heating a known mass of the air flow
measurement unit to
an elevated temperature by at least one
resistive heating element of
the air flow measurement unit — 510

Measuring resistances of a thermistor on
the known mass during cooling
of the known mass — 520

Transmitting measured resistance to
a computing device for determining
a cooldown time of the known mass — 530

Determining an installation
quality score, IQS,
based on the calculated cooldown time — 540

Fig. 5

Processed by Luminess, 75001 PARIS (FR)

**Description**

Technical field

The present invention relates to a room temperature transmitter comprising an air flow measurement unit, which room temperature transmitter is configured to determine its installation quality.

The invention also relates to an installation quality determination method of a room temperature transmitter comprising an air flow measurement unit and a computer program product.

Background

It is always useful to know the temperature of a room, house, or other indoor spaces. This allows to better manage the energy consumption, regulate the temperature and air conditioning and improve living or working comfort. Measuring thermal conditions in indoor spaces may be performed by several different measuring devices, thermometers. In heating, ventilating and air conditioning systems, there is especially a need for a thermometer measuring temperature correctly so that heating, ventilating and air conditioning can be correctly adjusted and controlled in indoor spaces. An example of a measuring device suitable to be used for this purpose is a room temperature transmitter (RTS) that has been designed for wall mounting and is used to sense temperature in indoor spaces.

Existing room temperature transmitters usually have a housing having ventilated openings, a connection terminal printed circuit board (PCB) and a temperature sensing element inside the housing. It measures indoor space temperature using approximation made by two sensors inside the housing, a main and secondary sensors. Internal heating of the RTS i.e. heating of electronics affects the readings of sensors. Heat is generated on the printed circuit board due power losses in electronics. The heat transfers by convection and conduction to both sensors inside the housing, which causes sensor readings usually raise. Therefore, the ambient air temperature reading provided by the RTS does not, at least in all conditions, represent the real ambient air temperature in an indoor space, even if a temperature reading of the main sensor is corrected by using a reading of the secondary sensor as a compensating factor. Air flow condition is one of those conditions in which the temperature measuring becomes more challenging. Air flow inside the RTS may be restricted or decreased with isolation walls or corresponding structures, which effect to convection heat transfer, but they do not prevent conduction heat transfer. In addition to that installation position of an RTS has its own effect on measured temperature readings.

Summary

It is the aim of the invention to provide and present a room temperature transmitter comprising an air flow measurement unit, which room temperature transmitter is capable to determine its installation quality, so an installer can install the room temperature transmitter so that it would measure ambient air temperature more reliably. A further aim is to provide a method for determining installation quality of a room temperature transmitter comprising an air flow measurement unit. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect, there is provided an air flow compensated room temperature transmitter configured to determine an installation quality score, IQS, of the temperature transmitter. The air flow compensated room temperature transmitter comprises a computing device and an air flow measurement unit. The air flow measurement unit comprises a known mass, at least one resistive heating element, a thermistor, at least one heat sink, and data transmission means configured to transmit a resistance signal of the thermistor. The at least one resistive heating element is configured to heat the known mass to an elevated temperature and the thermistor is configured to measure temperature of the heated known mass during cooling for calculation of a cooldown time of the known mass defined based on the measured resistances of the heated known mass by the computing device. The installation quality score, IQS, is determined based on the cooldown time by the computing device (404) using the following calculation formula:

$$IQS = \text{MAX} - \left( 1 - \frac{x}{f_{target}} \right) * f_{scaling}$$

,

wherein the x is the cooldown time of the known mass,
$f_{target}$ is a cooldown time of the known mass in seconds defined in ideal air flow conditions,
$f_{scaling}$ is a scaling factor defining how much the measured airflow can differ from $f_{target}$ value, and

MAX is the maximum possible installation quality score value.

According to an example, if the determined IQS value is greater than the MAX, the following calculation is performed for the IQS value:

$$IQS = \text{MAX} - (IQS - \text{MAX})$$

.

According to an example, the maximum possible installation quality score value is 100 and the minimum possible installation quality score value is 0. According to an example, the cooldown time is the time of cooling of the mass (101) from a first temperature of the elevated temperature to a second temperature of the elevated temperature. According to an example, the cooldown time is the time of cooling of the mass from 90% to 10% of the elevated temperature. According to an example, the at least one resistive heating element is at least one heating resistor. According to an example, the resistance of the thermistor is measured using a resistance measurement circuit, a voltage divider, a current measurement circuit, or combination of these. According to an example, the air flow compensated room temperature transmitter further comprises a housing, and a main temperature sensor, a secondary temperature sensor inside the housing The computing device is further configured to receive and process temperature data of the main temperature sensor and the secondary temperature sensor and resistance data of the air flow measurement unit for determining an air flow compensated ambient temperature of the air flow compensated room temperature transmitter. According to an example, the ambient temperature is determined using an air flow compensated ambient temperature compensation formula that is: Ambient temperature = main sensor reading + (secondary sensor reading - main sensor reading) * factor a + offset + cooldown time*factor b, wherein main sensor reading is a temperature reading of the main sensor, the secondary sensor reading is a temperature reading of the secondary sensor, the factors a and b are correction coefficients of the air flow compensated room temperature transmitter predetermined in a testing conditions, the offset is a difference between the actual temperature of the space and temperature measured by the air flow compensated room temperature transmitter, and the cooldown time is a cooling time of the known mass of the air flow measurement unit. According to an example, the air flow compensated room temperature transmitter further comprises a data transmitting means for receiving data from the main temperature sensor and the secondary temperature sensor and resistance data of the air flow measurement unit or for transmitting the ambient temperature data to a HVAC device. According to an example, the air flow measurement unit also acts as a secondary temperature sensor. According to an example, the air flow compensated room temperature transmitter also comprises a display for displaying the installation quality score.

According to a second aspect, there is provided an installation quality score determination method of an air flow compensated room temperature transmitter comprising a computing device and an air flow measurement unit. The method comprises heating a known mass of the air flow measurement unit to an elevated temperature by at least one resistive heating element of the air flow measurement unit, measuring resistances of a thermistor on the known mass during cooling of the known mass, transmitting the measured resistances to a computing device for calculating a cooldown time of the known mass, and determining an installation quality score, IQS, based on the calculated cooldown time.

According to an example, determining the installation quality score, IQS, based on the cooldown time is calculated based on:

$$IQS = \text{MAX} - \left(1 - \frac{x}{f_{target}}\right) * f_{scaling}$$

,

wherein the x is the cooldown time of the known mass,
$f_{target}$ is a cooldown time of the known mass in seconds defined in ideal air flow conditions, $f_{scaling}$ is a scaling factor defining how much the measured airflow can differ from $f_{target}$ value, and MAX is the maximum possible installation quality score value. According to an example, if the determined IQS value is greater than the MAX, the method further comprises performing the following calculation the calculated IQS value:

$$IQS = \text{MAX} - (IQS - \text{MAX})$$

.

According to a third aspect, there is provided a computer program product embodied on a non-transitory computer readable medium, the computer program product comprising computer instructions that, when executed on at least one processor of an air flow compensated room temperature transmitter is configured to perform the method according to the second aspect and its examples.

Brief description of the drawings

In the following, various embodiments of the invention will be described in more detail with reference to the appended figures, in which

Fig. 1    shows an air flow measurement unit of an air flow compensated RTS,

Fig. 2    shows, as an example, a graphic of an air flow measurement cycle of the air flow measurement unit shown in figure 1,

Fig. 3    shows, as an example, a more detailed graphic of an air flow measurement cycle of the air flow measurement unit shown in figure 1,

Fig. 4    shows, as an example, an air flow compensated RTS,

Fig. 5    shows an installation quality determination method of an air flow compensated room temperature transmitter comprising a computing device and an air flow measurement unit, and

Fig. 6    shows an installation quality graph comprising two different IQS value graphics of an air flow compensated room temperature transmitter, when arranged in different installation locations, and a graph of an air flow according to an example embodiment.

Detailed description

Heating, ventilation, and air conditioning (HVAC) system controls temperature, humidity, and purity of the air in an enclosed indoor space. Its goal is to provide thermal comfort and acceptable indoor air quality. A HVAC system includes heating equipment, ventilation equipment, and cooling or air-conditioning equipment. The HVAC system is an important part, for example of residential structures such as single family homes, apartment buildings, hotels, and senior living facilities; medium to large industrial and office buildings and hospitals, where safe and healthy building conditions are regulated with respect to temperature, humidity and ventilation. The HVAC system controls heating, cooling and air-ventilation based on temperature readings of a room or other indoor space measured by a room temperature transmitter, RTS, designed for automatic HVAC systems. A room temperature transmitter can also be used as such just for measuring and indicating ambient temperatures of an indoor space.
In order to control heating, cooling and air-ventilation correctly, a HVAC system needs a room temperature transmitter that measures ambient temperature accurately. Accurate measuring is not always possible in indoor spaces especially not in air flow conditions. Air flow inside a housing of an RTS increases temperature around sensors and thus temperature measurement readings of sensors. This is because the air flow pushes heat to sensors when flowing through the RTS housing, for example, an air flow flowing downwards pushes heat from a top of the housing to sensors, and thus measured temperature readings will be too high. This is the case, for example, with existing RTSs, which do not take into account heating properties of an air flow inside the housing effecting temperature readings of the sensors of the RTS and causing erroneous readings. The size and/or change of an error of a measured ambient air temperature reading depends on, for example, an amount of an air flow, how the air flow affects sensors i.e. how the air flow reaches the sensors and an amount of internal heating of electronics (thermal load inside the housing). Thus some temperature transmitter designs may be less affected by an air flow. In general, large heat loads cause more problems and incorrect heat readings with air flow than small ones. In addition to that some installation locations of temperature transmitters may be less affected by an air flow than other locations. Therefore it is important to install a temperature transmitter to a location, where it has air flow conditions, which does not affect too much to ambient air temperature measurement readings or which affect as less as possible to them and that an installer knows that the installation location is proper and according to installation instructions for ambient air temperature measuring. Multiple factors i.e. so called location conditions of a temperature transmitter location affect to temperature measurement readings, such as airflow coming from a window(s), for example an open window or a draft from a window, an open door(s), a ventilation or a replacement air valve(s), etc. An external device or devices may also affect to temperature measurement readings, such as a heater(s), an electrical equipment, a TV, etc. Also, for example the sun heating a wall beneath a temperature transmitter may cause an excessive airflow and thus error to temperature measurement readings. Airflow can also be limited by external factors, such as other devices mounted on top or bottom of an RTS, or added insulation that blocks ventilation holes in the housing of an RTS.

The effect of an air flow to temperature measurement readings is especially big, when the air flow is large or varying. The air flow may affect the measuring readings of an RTS, even significantly, even if its temperature measuring results are corrected by a correction factor. This is because this correction factor is defined under stable conditions when there is no air flow or just small constant air flow. Therefore, measurement accuracy of existing RTS may be valid only in very narrow conditions and may get lower in changing air flow conditions. This increases probability and size of erroneous temperature measurement readings.

Therefore, there is a need for an air flow compensated room temperature transmitter i.e. an air flow compensated RTS that takes into account the heating effects of an air flow to temperature sensors of the RTS in its measurements by correcting temperature measurement readings with a formula, in which an air flow is compensated, and which further guides installation of the temperature transmitter so that it would be installed in an ideal air flow conditions i.e. air flow free or almost air flow free conditions, as possible. For this air flow compensation the amount of air flow inside a housing of the RTS has to be measured. Disruption to heat transfer inside an RTS housing can be estimated and correct ambient air temperature can be calculated using the measured air flow. This way an effect of an air flow to ambient temperature readings of an RTS can be minimized and the temperature measurement accuracy can be kept high and size of errors low even in changing air flow conditions. In this context the term "RTS" covers different kinds of room temperature transmitters, temperature transmitters, indoor temperature transmitters, and room temperature controllers.

The air flow compensated RTS has been designed for wall mounting on a wall surface or on a flush mounting box. Because the air flow compensated RTS takes into account an air flow in its measuring, it can be installed more freely, but it still measures temperature readings better if it is arranged, as above mentioned, in ideal conditions. Thus, a room temperature transmitter comprising an air flow measurement unit, which room temperature transmitter is configured to determine its installation quality by an installation quality score, IQS, of a room temperature transmitter comprising an air flow measurement unit is beneficial. This kind of RTS can inform an installer, for example that an excessive or too big air flow is detected in a current position of the installed RTS and temperature measurement errors are more likely. In other words, the installation quality score is a scoring system for installation. IQS value range may be, for example from 0 to 100, where 100 is the maximum and best IQS value and 0 is the minimum and worst IQS value i.e. 100 means the best possible installation, where temperature measurement errors are more unlikely, and 0 means the bad installation, where temperature measurement errors are more likely. But it should be noted that the maximum IQS value may be determined to be something else than 100 as well as the minimum IQS value may be determined to be something else than 0. The IQS value is proportional to an airflow measured within an RTS device and it is referenced to laboratory installation of device, if installation of the RTS is correct, which means that installation instructions are followed, there is very little air flow measured inside the RTS, hence the IQS value will be close to 100. However, an IQS value can fluctuate due to a measurement noise. Good installation range is between 100-80. When an air flow is increased inside the RTS the IQS value will decrease.

The air flow compensated RTS with installation quality determination solves problems caused to temperature measurement readings by an air flow, even when internal heating of the RTS is major i.e. the RTS comprises large thermal loads, major internal heating heats the sensors more, and its effect is even bigger when air flows through the RTS. Examples of RTSs with large thermal loads are room units with a display, a display backlight with a high power heat source and room temperature unit controllers, where display and outputs for thermal actuators are needed. By installation quality determination it can be ensured that RTS is installed in a qualified way, following installation instructions.

Using an air flow compensated temperature measurement method performed by an air flow compensated RTS in air flow conditions, can an air flow inside a housing of the RTS be measured and used as an input parameter for an air flow compensated temperature compensation formula. When air flow is included in compensation, temperature measurement errors of RTS devices can be kept within more accurate tolerances. Temperature measurement errors in air flow conditions using an air flow compensated RTS may usually vary only around +/-0.3C, when temperature measurement errors in air flow conditions using an existing RTS without air flow compensation can vary around +/-1.0°C. While the general i.e. common requirement for the room temperature measurement accuracy is +/-0.5°.

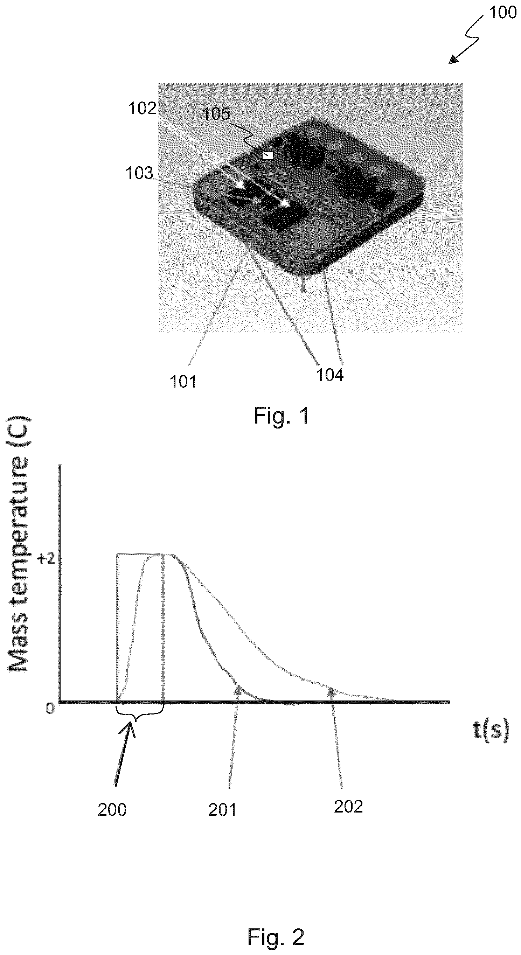

A cooldown time of a known mass is measured. Measured cooldown time is proportional to the air flow velocity through a housing of RTS. Air flow velocity can be calculated from the cooldown time of that known mass. Cooldown time is averaged over multiple measurements. This prevents short airburst affecting the measurement, such as person passing by. Only a constant air flow, such as air conditioning fan turned on, is noted. After the fan is turned off, cooldown time returns to no flow value i.e. as 0. An air flow measurement unit with a known mass is arranged inside a housing of an air flow compensated RTS (not shown). An air flow measurement unit 100 of an air flow compensated RTS is shown in figure 1. The air flow measurement unit 100 comprises a known mass 101, at least one heater i.e. a resistive heating element 102, for example, a heating resistor, a thermistor 103, at least one heat sink 104, and data transmission means 105 configured to transmit the resistance signal of thermistor 103 to a computing device of the air flow compensated RTS. Temperature of known mass 101 is determined based on the data transmission means 105 by the computing device of the air flow compensated RTS, by converting the received resistance to temperature using a voltage divider, current-to-voltage conversion, or resistance measurement circuit. The mass 101 may be made, for example, of circuit board FR4 and copper that is plated with e.g. tin or gold. The heat sink may be made of copper that is plated with tin or gold or any other suitable material.

Cooling of the mass 101 happens by convection to the air inside a housing of the RTS. Temperature of the mass 101 is measured using the thermistor 103. The cooldown time of the mass 101 i.e. heat transfer rate is proportional to convection heat-transfer coefficient of air.

Before cooling, the mass 101 is heated above ambient temperature, for example +2C above the air inside the housing using resistive heating elements 102. Then the mass 101 is let to cool down back to the starting temperature i.e. to the temperature inside the housing. This increase of temperature caused by heating may be marked by dt. The mass 101 is heated to temperature using, for example, a PI-controlled heating process. This ensures that elevated temperature can be reached accurately and fast, regardless of conditions.

Formula used for measuring heat transfer rate is as follows:

$$Q = hA\Delta T,$$

where

Q=a heat transfer rate of the known mass of the air flow measurement unit,
H= a convection heat-transfer coefficient of air,
A= an exposed surface area i.e. area of at least one heat sink 104 and at least one resistive heating element 102, and
$\Delta$T= a temperature difference (dt)

The heat transfer rate of the known mass 101 of the air flow measurement unit 100 is proportional with the cooldown time, and vice versa, and the cooldown time may be, for example, the time of cooling of the mass 101 from 90% to 10% of the temperature increase i.e. the elevated temperature, meaning that the cooldown time is, for example, if the mass 101 is heated 2°C above the temperature inside the casing, the measured cooldown time is a time that it takes for the temperature to decrease from 1.8°C to 0.2°C. Measured cooldown time is then normalized to no-air flow-condition cooldown time to determine air flow. The cooldown time may be also other than the above mentioned time of cooling of the mass 101 from 90% to 10% of the temperature increase. It may be, for example, from 80% to 10%, from 95% to 15% or any other desired and suitable range. In other words, the cooldown time is measured during cooling of the mass 101 from some point of the elevated temperature to some point above the ambient temperature i.e. cooling of the mass 101 from a first temperature of the elevated temperature to a second temperature of the elevated temperature. The cooldown time is determined/calculated by the computing device of the RTS. The temperature increase i.e. the elected temperature can also be something else than 2°C, it may be, for example, between 1°C to 4°C, or even more.

As the cooldown time is calculated, the air flow compensated ambient temperature reading may be calculated using an air flow compensated ambient temperature compensation formula that is as follows:

Ambient temperature = main sensor reading + (secondary sensor reading - main sensor reading) * factor a + offset + cooldown time * factor b

wherein

main sensor reading = a temperature reading of the main sensor,
secondary sensor reading = a temperature reading of the secondary sensor, factors a and b = correction coefficients of an RTS predetermined in a testing conditions, where the RTS was used in different environments and use cases/scenarios.
offset = a difference between the actual temperature of the space and temperature measured by the RTS, and
cooldown time = cooling time of a mass of the air flow measurement unit.

Factors a and b are needed, because the heating of the RTS is not constant, but depends on a thermal load, for example whether the display backlight is on or off, in which cases the heating and power loss are different. As the power loss increases, the temperature difference between the main and secondary sensor increases, so with offset correction alone, the sensor reading would also increase compared to the actual ambient temperature. The offset is defined in the testing conditions, where the actual temperature is measured by an external temperature sensor arranged in the vicinity of the RTS.

IQS values are also determined/calculated by the computing device of the RTS.

An IQS value is calculated with the following equation. In this example, the maximum IQS value is predetermined to be 100 and used in the equation, but it may be determined to be something else, and in that case the number 100 of the following equations are replaced by that number:

$$IQS = 100 - \left(1 - \frac{x}{f_{target}}\right) * f_{scaling} \quad,$$

wherein x is the above mentioned cooldown time of the mass 101 of the air flow measurement unit 100 of the RTS in seconds,

$f_{target}$ is a cooldown time of the mass 101 in ideal air flow conditions in seconds, defined in the development phase of the RTS by test installations in the laboratory environment where the external airflow can be adjusted and ideal air flow can be found, and

$f_{scaling}$ is a scaling factor, which defines how much the measured airflow can differ from $f_{target}$ value. $f_{scaling}$ is adjusted so that IQS reaches 0 or some other defined low value, ex < 25, when errors in the measurement become greater than is allowed by the specification of RTS.

If the determined IQS value is calculated to be greater than that 100, the following calculation is performed for the IQS value

$$IQS = 100 - (IQS - 100)$$

, which will lower the IQS value, if the cooldown time is increased from the target value. IQS minimum score value is limited to 0.

IQS values may also be measured at variable or fixed intervals, result values will be placed in the 5 measurement median calculation. Measurement is averaged over a measuring time period. For example, if a measuring time period is 1 hour, the measurement frequency may be averaged to be, every minute, so that there is 60 measurements per that hour i.e. n=60. Some other measuring time periods and measurement frequencies may also be used. But the averaged $IQS_{avg}$ would be calculated by the following equation:

$$IQS_{avg} = \frac{1}{n}\sum_{i=1}^{n} IQS_i$$

Standard deviation of values can be calculated to determine turbulence of measured airflow by the following equation:

$$IQS_\sigma = \sqrt{\frac{\sum(IQS_i - IQS_{avg})^2}{N}}$$

These IQS values and the result of 5 median can be used in location to determine problems in the installation. For example, a thermostat controlled heater or cooler will cause a rapid airflow that can be seen in the standard deviation of measured IQS values. Resulting averaged 0-100 IQS value can be split further for example in 4 zones (100-75, 74-50, 49-25, <25 IQS) corresponding values 1 to 4, where each value can be used as approximation of resulting errors in measurements, for example different distribution of errors in the measurement or the absolute inaccuracy of the measurement.

If the maximum possible IQS value (MAX) is not predetermined to be 100, the following equations would be used instead of above mentioned equations comprising the value 100:

$$IQS = \text{MAX} - \left(1 - \frac{x}{f_{target}}\right) * f_{scaling}$$

and

$$IQS = \text{MAX} - (IQS - \text{MAX})$$

Figure 2 shows, as an example, a graphic of an air flow measurement cycle of the air flow measurement unit 100 shown in figure 1. The air flow measurement is performed by measuring cooldown time of the mass 101. The reference number 200 indicates a heating time period, during which the heater 102 is on and is configured to heat the mass 101 2°C. The curve 201 indicates a cooldown time of the mass 101, when there is an air flow 0,2m/s and the curve 202 indicates a cooldown time of the mass 101, when there is no air flow and cooling of the mass 101 happens just by natural convection.

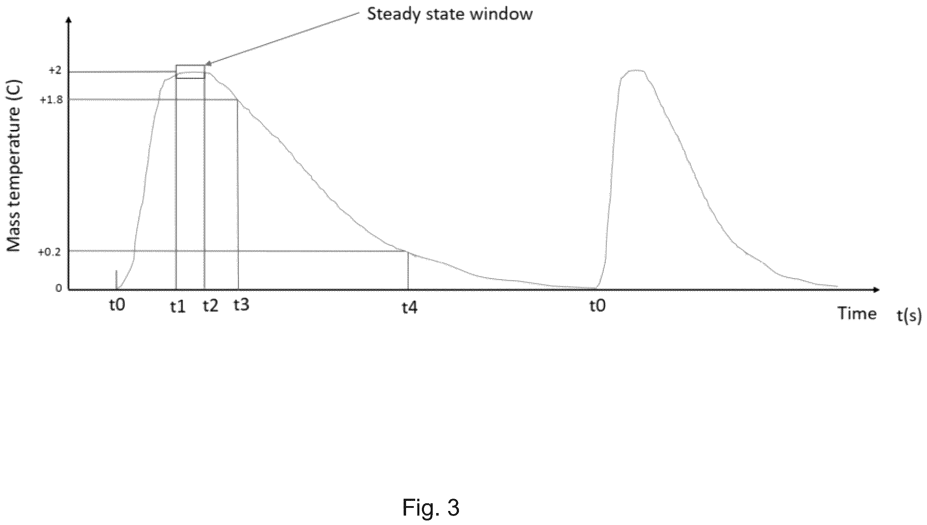

Figure 3 shows, as an example, a more detailed graphic of an air flow measurement cycle of the air flow measurement unit 100 shown in figure 1. The air flow measurement cycle starts at the time point t0 with the heating of mass 101 to the predetermined elevated temperature. In this example it is +2°C to an ambient air temperature. After the mass 101 temperature is reached this elevated temperature at the time point t1, the temperature of the mass 101 is kept at that constant temperature for time period t1-t2 to ensure that the whole mass 101 has heated and evenly heated in order to achieve a better measurement accuracy. This time period of keeping the mass 101 at the elevated temperature may be called, for example, as a steady state window. This cooldown time of the mass 101 is measured when temperature reaches/cools a start point t3 that is 10% below the elevated temperature i.e. the ambient air temperature +1.8C. Cooldown time measuring ends at an end point t4, when temperature reaches 90% below the elevated temperature i.e. the ambient air temperature +0.2C.

New cooldown time measurement cycle may begin again after the mass temperature has cooled back to the start temperature i.e. to the temperature inside the housing of the RTS; this starting time point is again t0. Time between air flow measurement cycles may be calculated as a multiple of a cooldown time, for example, if the cooldown time is 60 seconds, a new cycle air flow measurement cycle may be started after 5*60s has passed. This ensures that the whole mass 101 has reached the constant temperature +0°C to the ambient air. Air flow measurement may be done, for example, every couple of minutes and after a couple air flow measurements temperature readings of the RTS are correct ambient temperature readings.

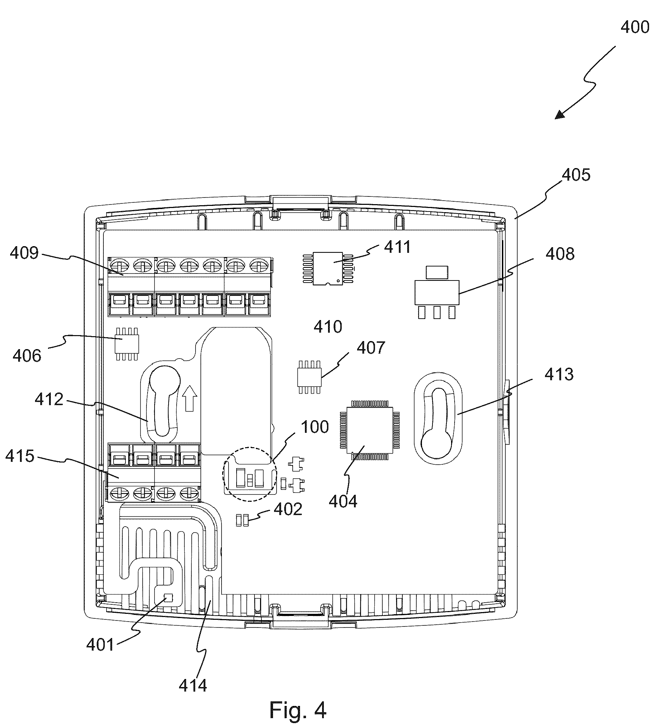

In figure 4 it is shown an air flow compensated RTS 400 comprising a housing 405, a first (main) sensor 401 and a second i.e. secondary sensor 402 and an air flow measurement unit 100, a data transmitting means 406, for example, a wired or wireless data transmitter, and a computing device 404 configured to process received data i.e. temperature data of the first sensor and the secondary sensor and resistance data of a thermistor of the air flow measurement unit 100, which are connected to the computing device 404. The first sensor 401 and the secondary sensor 402 and the air flow measurement unit 100 are connected to the computing device 404 in such a way, in a wired or wireless manner, that the sensor data can be transmitted from them 401, 402, 100 to the computing device 404. The computing device 404 may be, for example, a microcontroller, MCU, and comprise at least one memory 407 for storing a computer program and sensor data, a processor for running the computer program, and one or more types of data transmission means for receiving sensor data and/or transmitting data such as configuration signals or messages for controlling temperature, ventilation or humidity. There is a thermal separation, for example, a slot in the PCB, between the main sensor 401 and the air flow measurement unit 100 i.e. they are not next to each other so that the heat does not transfer to the main sensor 401, when the mass of the air flow measurement unit 100 is heated when measuring cooldown time. In this example embodiment the secondary sensor 402 and the air flow measurement unit 100 are two separate means, however it is possible that the air flow measurement unit 100 also acts as a secondary temperature sensor in addition to be used for cooldown time measuring of the mass so that separate secondary sensor 402 is not needed at all. Ventilation openings 414 of the housing 405 are such that the air flow inside the housing 405 is configured to flow over sensors 401, 402 and to cool other components inside the housing 405.

The computing device 404 is configured to process measured data provided by temperature sensors 401, 402 and the air flow measurement unit 100 for calculating the air flow compensated ambient temperature reading. The RTS 400 may also comprise a display for displaying installation quality scores, air flow corrected temperature readings, and also possible air flow readings i.e. an amount of the air flow/second, as well as other means, such as means for receiving user inputs, for example, a keyboard, a touch screen, touch areas, soft keys, a microphone, a speaker, or other input/output mechanisms (not shown). The RTS 400 may further comprise user interface circuitry configured to control at least some functions of the user interface. The RTS 400 communicates with a HVAC system, it transmits by its data transmitting means 406 at least the calculated air flow compensated ambient temperature reading, but it may also transmit air flow readings, or temperature readings measured by the main and secondary sensors, over a data transmission network, for example, using WLAN (Wireless Local Area Network), Bluetooth, Modbus, some other digital data transfer bus, voltage or current signal, or GSM, CDMA or WCDMA technologies or future technologies, or other data network technologies.

The computing device 404 comprises at least one processor that may, for example be embodied as one or more of various hardware processing means such as a coprocessor, a microprocessor, a controller, a digital signal processor (DSP), a processing element with or without an accompanying DSP, etc. The processor may include one or more processing cores configured to perform independently. The processor may be configured to execute instructions stored in at least one memory of the computing device 404 or otherwise accessible to the processor. The processor may, for example be configured to analyse temperature and cooldown time data captured by the sensors 401, 402 and air flow measurement unit 100. The data transmitting means 406 may be any means such as a device or circuitry embodied in either hardware or a combination of hardware and software that is configured to receive and/or transmit data. The air flow compensated RTS 400 may further comprise a power supply 408 of the air flow compensated RTS 400, an output connector 409, a circuit board (PCB) 410, a data to voltage/current signal converter 411, mounting holes 412 and 413 for mounting the air flow compensated RTS 400 on the wall by fixing means, for example, screws, an input terminal 415, where, for example an external temperature sensor can be connected.

The output connector 409 may be configured to connect the air flow compensated RTS 400, for example to a HVAC system or auxiliary device, such as to a heating valve/actuator. The data to voltage/current signal converter 411 is configured to convert data to suite connected device that is connected to the output connector 409. The parts 401, 402, 404 and 406-415 of the air flow compensated RTS 400 are arranged on the circuit board 410, which is arranged inside the housing 405. It should be noted that all the shown parts in the figure 4 may not be essential part of the air flow compensated (RTS) 400.

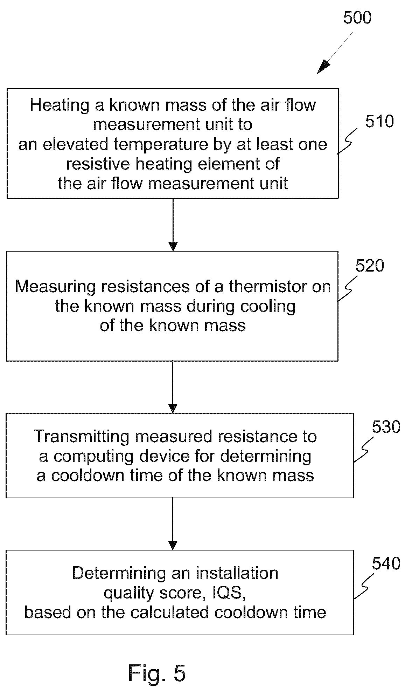

Figure 5 shows an installation quality score determination method 500 of an air flow compensated room temperature transmitter, which the air flow compensated room temperature transmitter comprises a computing device and an air flow measurement unit. In step 510, a known mass of the air flow measurement unit is heated to an elevated temperature by at least one resistive heating element of the air flow measurement unit. In step 520, resistances of a thermistor on the known mass are measured during cooling of the known mass, for example using a voltage divider. It is also possible to measure temperature of known mass instead of resistances of the thermistor. In step 530, measured resistance are transmitted to a computing device for determining a cooldown time of the known mass for determination of an air flow corrected ambient temperature of the air flow compensated room temperature transmitter. In step 540, an installation quality score, IQS, is determined based on the calculated cooldown time.

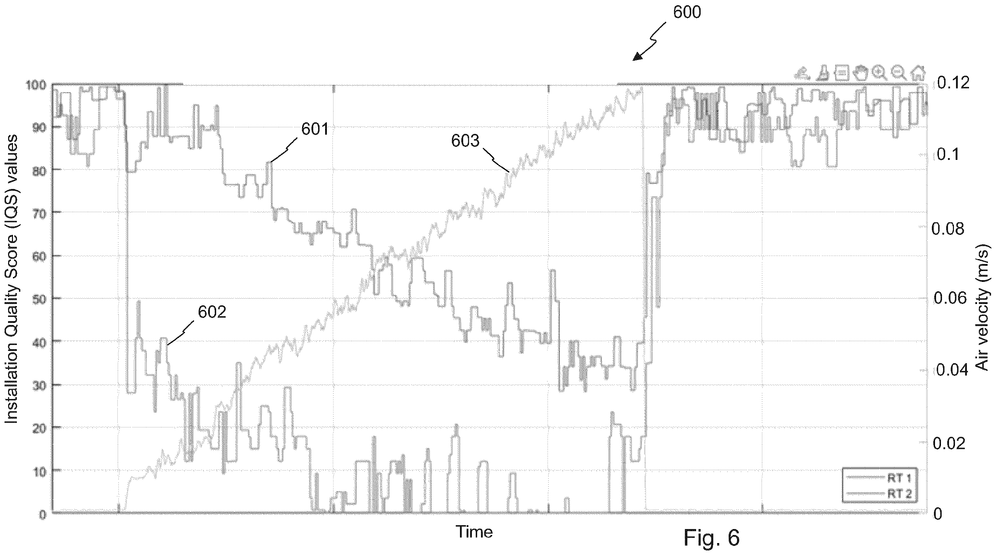

Fig. 6 shows an installation quality score graph 600 comprising two different IQS value graphics 601, 602 of an air flow compensated room temperature transmitter, when the air flow compensated room temperature transmitter is arranged in two different installation locations or when two different installation methods are used, right and wrong, and with different air flow amounts, shown by a graph of an air flow 603 according to an example embodiment. In the first installation, the temperature transmitter is installed on a wall following installation instructions, its IQS value graph is shown by the reference number 601. Increase in the air flow 603 starts to gradually decrease the IQS values of the first installation as shown by its graph 601. In the second installation, the temperature transmitter is installed in improperly allowing air to flow through the housing of the RTS, for example the back side of the housing of the RTS has been left unblocked. As can be seen from the graph of the second installation 602, when the airflow 603 starts, IQS values shown in the graph of the second installation 602 immediately rapidly falls below 50 and IQS values shown in the graph of the second installation 602 reach even zero values when the air flow 603 is further increased.

Thus, an air flow-compensated room temperature transmitter used for determining installation quality is an installation quality determining air flow-compensated room temperature transmitter, which may also be simply called an installation quality determining room temperature transmitter. Its additional function, in addition to determine air flow-compensated room temperature, is to determine installation quality based on an Installation Quality Score (IQS), which indicates calculated likelihood of temperature measurement errors. It is explained above, how this IQS can be determined and how it allows reliably installation quality to be determined based on it.

The various example embodiments of the invention can be implemented with the help of computer program code that resides in a memory and causes the relevant device to carry out the invention. For example, an RTS may comprise circuitry and electronics for handling, receiving, and transmitting sensor, air flow measurement unit, and IQS value data, a computer program code in a memory, and a processor that, when running the computer program code, causes the RTS device to carry out the features of an example embodiment.

It will be obvious that the present invention is not limited solely to the above-presented embodiments, but it can be modified within the scope of the appended claims.

**Claims**

1. An installation quality determining air flow compensated room temperature transmitter (400), the airflow compensated room temperature transmitter (400) comprises a computing device (404) and an air flow measurement unit (100), which the air flow measurement unit (100) comprises a known mass (101), at least one resistive heating element (102), a thermistor (103), at least one heat sink (104), and data transmission means (105) configured to transmit a resistance signal of the thermistor (103), the at least one resistive heating element (102) is configured to heat the known mass (101) to an elevated temperature and the thermistor (103) is configured to measure temperature of the heated known mass (101) during cooling for calculation of a cooldown time of the known mass (101) defined based on the measured resistances of the heated known mass (101) by the computing device (404), wherein the installation quality is determined based on an installation quality score, IQS, indicating likelihood of temperature measurement errors, and which is determined based on the cooldown time by the computing device (404) based on:

$$IQS = \text{MAX} - \left(1 - \frac{x}{f_{target}}\right) * f_{scaling}$$,

wherein the x is the cooldown time of the known mass (101),
$f_{target}$ is a cooldown time of the known mass (101) in seconds defined in ideal air flow conditions,
$f_{scaling}$ is a scaling factor defining how much the measured airflow can differ from $f_{target}$ value, and
MAX is the maximum possible installation quality score value.

2. An air flow compensated room temperature transmitter (400) according to claim 1, wherein if the determined IQS value is greater than the MAX, the following calculation is performed for the IQS value:

$$IQS = \text{MAX} - (IQS - \text{MAX})$$

3. An air flow compensated room temperature transmitter (400) according to claim 1 or 2, wherein the maximum possible installation quality score value is 100 and the minimum possible installation quality score value is 0.

4. An air flow compensated room temperature transmitter (400) according to claim 1, 2 or 3, wherein the cooldown time is the time of cooling of the mass (101) from a first temperature of the elevated temperature to a second temperature of the elevated temperature.

5. An air flow compensated room temperature transmitter (400) according to any of claims 1 to 4, wherein the cooldown time is the time of cooling of the mass (101) from 90% to 10% of the elevated temperature.

6. An air flow compensated room temperature transmitter (400) according to any of claims 1 to 5, wherein the at least one resistive heating element (102) is at least one heating resistor.

7. An air flow compensated room temperature transmitter (400) according to any of claims 1 to 6, wherein the resistance of the thermistor (103) is measured using a resistance measurement circuit, a voltage divider, a current measurement circuit, or combination of these

8. An air flow compensated room temperature transmitter (400) according to any of claims 1 to 7, wherein the air flow compensated room temperature transmitter (400) further comprises a housing (405), and inside the housing (405) a main temperature sensor (401), a secondary temperature sensor (402), and which the computing device (404) is further configured to receive and process temperature data of the main temperature sensor (401) and the secondary temperature sensor (402) and resistance data of the air flow measurement unit (100) for determining an air flow compensated ambient temperature of the air flow compensated room temperature transmitter (400).

9. An air flow compensated room temperature transmitter (400) according to claim 8, wherein the ambient temperature is determined using an air flow compensated ambient temperature compensation formula that is:

Ambient temperature = main sensor reading + (secondary sensor reading - main sensor reading) * factor a + offset + cooldown time * factor b,

wherein

main sensor reading = a temperature reading of the main sensor,
secondary sensor reading = a temperature reading of the secondary sensor,
factors a and factor b = correction coefficients of the air flow compensated room temperature transmitter (400) predetermined in a testing conditions,
offset = a difference between the actual temperature of the space and temperature measured by the air flow compensated room temperature transmitter (400), and
cooldown time = cooling time of the known mass (101) of the air flow measurement unit (100).

10. An air flow compensated room temperature transmitter (400) according to claim 8 or 9, wherein the air flow compensated room temperature transmitter (400) further comprises a data transmitting means (406) for receiving data from the main temperature sensor (401) and the secondary temperature sensor (402) and resistance data of the air flow measurement unit (100) or for transmitting the ambient temperature data to a HVAC device.

11. An air flow compensated room temperature transmitter (400) according to any of claims 8 to 10, wherein the air flow measurement unit (100) also acts as a secondary temperature sensor.

12. An air flow compensated room temperature transmitter (400) according to any of claims 8 to 11, wherein the air flow compensated room temperature transmitter (400) also comprises a display for displaying the installation quality score.

13. An installation quality determination method of an air flow compensated room temperature transmitter (400) comprising a computing device (404) and an air flow measurement unit (100), the method comprises:

heating a known mass (101) of the air flow measurement unit (100) to an elevated temperature by at least one resistive heating element (102) of the air flow measurement unit (100),
measuring resistances of a thermistor on the known mass (101) during cooling of the known mass (101),
transmitting the measured resistances to a computing device for calculating a cooldown time of the known mass (101), and
determining the installation quality based on an installation quality score, IQS, indicating likelihood of temperature measurement errors and being determined based on the calculated cooldown time.

14. An installation quality score determination method according to claim 13, wherein determining the installation quality score, IQS, based on the cooldown time is calculated based on:

$$IQS = \text{MAX} - \left(1 - \frac{x}{f_{target}}\right) * f_{scaling},$$

wherein the x is the cooldown time of the known mass (101),
$f_{target}$ is a cooldown time of the known mass (101) in seconds defined in ideal air flow conditions,
$f_{scaling}$ is a scaling factor defining how much the measured airflow can differ from $f_{target}$ value, and
MAX is the maximum possible installation quality score value.

15. An installation quality score determination method according to claim 13 or 14, wherein if the determined IQS value is greater than the MAX, the method further comprises performing the following calculation for the calculated IQS value:

$$IQS = \text{MAX} - (IQS - \text{MAX}).$$

16. A computer program product embodied on a non-transitory computer readable medium, the computer program product comprising computer instructions that, when executed on at least one processor of an installation quality determining air flow compensated room temperature transmitter (400) according to any of claims 1 to 12, is configured to perform the method according claim 13, 14 or 15.

Fig. 1

Fig. 2

Fig. 3

EP 4 603 812 A1

Fig. 4

500

Heating a known mass of the air flow
measurement unit to
an elevated temperature by at least one
resistive heating element of
the air flow measurement unit

510

Measuring resistances of a thermistor on
the known mass during cooling
of the known mass

520

Transmitting measured resistance to
a computing device for determining
a cooldown time of the known mass

530

Determining an installation
quality score, IQS,
based on the calculated cooldown time

540

Fig. 5

Fig. 6

EP 4 603 812 A1

Europäisches
Patentamt

European
Patent Office

Office européen
des brevets

## EUROPEAN SEARCH REPORT

**Application Number**

EP 25 15 0134

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/298431 A1 (KAUTZ THOMAS O [US] ET AL) 4 December 2008 (2008-12-04) * abstract * * the whole document * ----- | 1-16 | INV. G01K1/00 G01K3/10 G01K13/00 G01K15/00 |
| A | US 2013/261808 A1 (BESORE JOHN K [US] ET AL) 3 October 2013 (2013-10-03) * abstract * * the whole document * ----- | 1-16 | |

**TECHNICAL FIELDS SEARCHED      (IPC)**

G01K

The present search report has been drawn up for all claims

| Place of search | Date of completion of the search | Examiner |
|---|---|---|
| The Hague | 5 June 2025 | Bagnera, Carlo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 15 0134

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2025

| Patent document cited in search report | Publication date | Patent family member(s) | Publication date |
|---|---|---|---|
| US 2008298431 A1 | 04-12-2008 | DE 102004059730 A1 | 06-10-2005 |
| | | JP 2005265844 A | 29-09-2005 |
| | | US 2005209813 A1 | 22-09-2005 |
| | | US 2006074586 A1 | 06-04-2006 |
| | | US 2008298431 A1 | 04-12-2008 |
| US 2013261808 A1 | 03-10-2013 | NONE | |

EPO FORM P0459

For more details about this annex : see Official Journal of the European Patent Office, No. 12/82